# EUROPEAN PATENT SPECIFICATION

(11) **EP 2 628 670 B1**
(45) Date of publication and mention of the grant of the patent: **02.04.2014**
(21) Application number: 12192013.6
(22) Date of filing: 09.11.2012
(51) Int. Cl.: B62J 17/00, B62J 17/02, B62J 23/00, F01M 5/00

(54) **Saddle riding type vehicle**
Sattelfahrzeug
Véhicule de type à selle

(30) Priority: 16.02.2012 JP 2012031859
(43) Date of publication of application: 21.08.2013
(73) Proprietor: Honda Motor Co., Ltd., Tokyo 107-8556 (JP)
(72) Inventor: Tsukui, Hiroaki c/o Honda R&D Co., Ltd., Saitama, 351-0193 (JP); Nagata, Masato c/o Honda R&D Co., Ltd., Saitama, 351-0193 (JP)
(74) Representative: Herzog, Markus

(56) References cited:
- JP-A- 2007 118 653
- JP-A- 2009 113 654

## Description

The present invention relates to a saddle riding type vehicle including an internal combustion engine having a lower forward portion covered with an under cowl.

### Background Art

A saddle riding type vehicle according to the preamble of claim 1 is known from JP 2009-113654 A.

JP 2007-118653 A discloses a further saddle riding type vehicle including an internal combustion engine having a lower forward portion covered with an under cowl.

A further known saddle riding type vehicle includes an internal combustion engine having a lower forward portion covered with an under cowl (see, for example, Japanese Patent Document JP 2011-74801 A (Figs. 2 and 4)).

Referring to Fig. 2 of Japanese Patent Document JP 2011-74801 A, an under cowl (26) (numbers in parentheses represent reference numerals assigned in Japanese Patent Document JP 2011-74801 A; the same holds hereunder) covers a lower forward portion of an internal combustion engine (14).

The under cowl (26) has an opening portion (34) through which an airflow is introduced to thereby cool an oil pan (15).

Referring to Fig. 4 of Japanese Patent Document JP 2011-74801 A, however, a pair of left and right opening portions (34, 34) is disposed outside in a vehicle width direction relative to the oil pan (15). While it is advantageous in terms of appearance that the oil pan (15) is not directly visible through the opening portions (34, 34), a drawback is that the airflow is not directed straight to the oil pan (15), resulting in poor cooling performance of the oil pan (15).

A need thus exists for an under cowl structure that can enhance cooling performance of an oil pan, while retaining favorable appearance.

### Summary of the Invention

### Problem to be Solved by the Intention

It is an object of the present invention to provide a saddle riding type vehicle comprising an under cowl structure that can enhance cooling performance of an oil pan of an internal combustion engine and exhaust pipes extending from the internal combustion engine, while retaining favorable appearance and increasing the protection of the oil pan.

### Means for Solving the Problem

The present invention recited in claim 1 provides a saddle riding type vehicle comprising an internal combustion engine which is supported on a vehicle body frame, an oil pan which is provided at a lower portion of the internal combustion engine, and an under cowl which covers an area forward of the oil pan. In the saddle riding type vehicle, the under cowl has an airflow introducing port that opens at a position overlapping the oil pan in a vehicle front view and opens obliquely upwardly such that an upper end of the airflow introducing port is disposed rearwardly of a lower end thereof along the vehicle in a vehicle side view to thereby introduce airflow to the oil pan.

Further, in the vehicle front view, the oil pan is disposed on one lateral side in a vehicle width direction and exhaust pipes extending from the internal combustion engine are disposed on the other lateral side in the vehicle width direction, and in the vehicle side view, the exhaust pipes overlap the airflow introducing port.

The invention recited in claim 2 is characterized in that upper and lower flanges and left and right flanges extend rearwardly along the vehicle from edges of the airflow introducing port.

The invention recited in claim 3 is characterized in that the lower flange is inclined such that a rear portion thereof is disposed upwardly of a front portion thereof.

The invention recited in claim 4 is characterized in that a catalyzer for purifying exhaust gas is disposed on the exhaust pipes, the catalyzer being disposed at a position overlapping the oil pan in the vehicle side view, and the exhaust pipes from the internal combustion engine to the catalyzer are bent toward the otherlateral side in the vehicle width direction from a vehicle body center in the vehicle front view.

The invention recited in claim 5 is characterized in that a coolant return pipe extending from a radiator is disposed on the one lateral side in the vehicle width direction in the vehicle front view.

### Effects of the Invention

According to the invention recited in claim 1, the under cowl has the airflow introducing port formed therein at a position overlapping the oil pan in the vehicle front view. This allows the airflow introduced through the airflow introducing port to be directed straight to the oil pan, thus promoting cooling of the oil pan. The airflow introducing port is open obliquely upwardly such that the upper end thereof is disposed rearwardly of the lower end thereof along the vehicle in a vehicle side view. Since the airflow introducing port is open upwardly, flying gravel or sand from a road surface is less likely to enter the airflow introducing port, so that, for example, the flying gravel and other objects is less likely to hit against the oil pan.

Further, in a vehicle front view, the oil pan is disposed on one lateral side in the vehicle width direction and the exhaust pipes extending from the internal combustion engine are disposed on the other lateral side in the vehicle width direction. The exhaust pipes and the oil pan are juxtaposed in the vehicle width direction, so that the exhaust pipes fit in place nicely.

Additionally, in a vehicle side view, the exhaust pipes overlap the airflow introducing port. Specifically, the exhaust pipes and the airflow introducing port are separate in the vehicle width direction, so that the airflow is directed to the exhaust pipes straightly, not via the airflow introducing port, while the airflow is directed straight to the oil pan via the airflow introducing port.

As a result, the exposed exhaust pipes are favorably cooled, while the oil pan is protected by the under cowl.

According to the invention recited in claim 2, the upper and lower flanges and the left and right flanges extend rearwardly along the vehicle from the edges of the airflow introducing port. The flanges reinforce the airflow introducing port. Though the airflow introducing port is open obliquely upwardly, the lower flange is visible when the airflow introducing port is viewed from above thanks to the flanges. Specifically, the oil pan is not readily visible through the airflow introducing port in a plan view, which enhances appearance.

According to the invention recited in claim 3, the lower flange is inclined such that the rear portion thereof is disposed upwardly of the front portion thereof. Because of the lower flange being inclined obliquely upwardly, a lower half of the airflow introducing port is hidden behind the lower flange in a vehicle front view. Specifically, the oil pan is not readily visible through the airflow introducing port in the front view, too, which enhances appearance. In addition, mud water, if any, on the lower flange slides down the inclined lower flange forwardly along the vehicle off the airflow introducing port, so that, for example, mud water can be prevented from entering the airflow introducing port.

According to the invention recited in claim 4, the catalyzer for purifying exhaust gas is disposed on the exhaust pipes. The catalyzer is disposed at a position overlapping the oil pan in a vehicle side view; and the exhaust pipes from the internal combustion engine to the catalyzer are bent toward the other lateral side in the vehicle width direction from a vehicle body center in a vehicle front view.

The exhaust pipes are bent to thereby extend their entire length. If the exhaust pipes are disposed forwardly of the oil pan, the oil pan is affected by heat. If the exhaust pipes are bent to be spaced away from the oil pan as in the present invention, however, cooling performance of the oil pan can be maintained.

According to the invention recited in claim 5, the coolant return pipe extending from the radiator is disposed on the one lateral side in the vehicle width direction in a vehicle front view. Specifically, the coolant return pipe is disposed on the first lateral side in the vehicle width direction, while the exhaust pipes or the catalyzer is disposed on the other lateral side in the vehicle width direction. The coolant return pipe can thus be spaced away from the exhaust pipes or the catalyzer having high temperatures.

### Brief Description of the Drawings

- Fig.1: is a left side elevational view showing a saddle riding type vehicle according to the present invention.
- Fig. 2: is an enlarged view showing a main part of the saddle riding type vehicle shown in Fig. 1.
- Fig. 3: is a view on arrow 3 of Fig. 2.
- Fig. 4: is a view on arrow 4 of Fig. 1.
- Fig. 5: is a perspective view showing an under cowl according to the present invention.
- Fig. 6: is a cross-sectional view showing, and illustrating operation of, the under cowl.

### Mode for Carrying Out the Invention

A specific embodiment according to the present invention will be described below with reference to the accompanying drawings. The drawings should be viewed in the direction of reference numerals. Expressions indicating directions of "front," "rear," "left," and "right" mean the same directions as those viewed from an occupant who sits on a seat.

### Embodiment

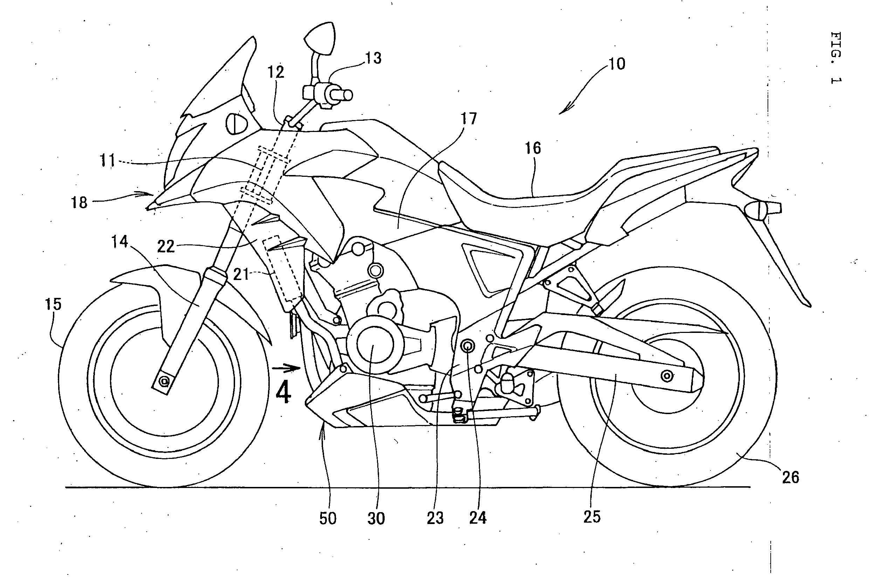

Referring to Fig. 1, a vehicle 10 is a saddle riding type vehicle in which a steering shaft 12 is steerably mounted on a head pipe 11, a steering handlebar 13 is disposed at an upper end of the steering shaft 12, a front fork 14 is mounted on the steering shaft 12, a front wheel 15 is rotatably mounted on the front fork 14, a seat 16 on which the occupant sits is disposed rearwardly of the head pipe 11, a knee grip member 17 against which the occupant presses his or her knees is disposed between the seat 16 and the head pipe 11, an upper cowl 18 is provided to cover a portion from the knee grip member 17 forward, an internal combustion engine 30 is disposed downwardly of the knee grip member 17, an under cowl 50 covers an area forward of the internal combustion engine 30, a radiator 21 is disposed between the front wheel 15 and the internal combustion engine 30, and a radiator shroud 22 is disposed sideways the radiator 21 in a vehicle width direction, the radiator shroud 22 introducing airflow to the radiator 21.

In addition, a swing arm 25 is vertically swingably mounted on a pivot frame 23 that forms part of elements of a rear portion of a vehicle body frame via a pivot shaft 24. A rear wheel 26 as a drive wheel is rotatably supported at a rear end of the swing arm 25.

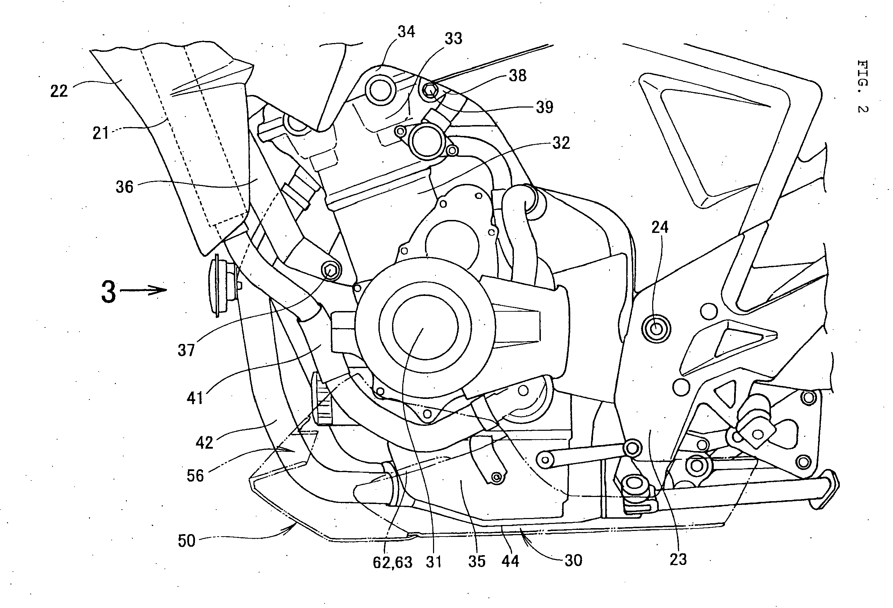

Referring to Fig. 2, the internal combustion engine 30 includes a crankcase 31, a cylinder 32 extending from the crankcase 31 obliquely upwardly toward the front of the vehicle, a cylinder head 33 mounted on the cylinder 32, a head cover 34 mounted on the cylinder head 33, and an oil pan 35 disposed at a lower portion of the crankcase 31.

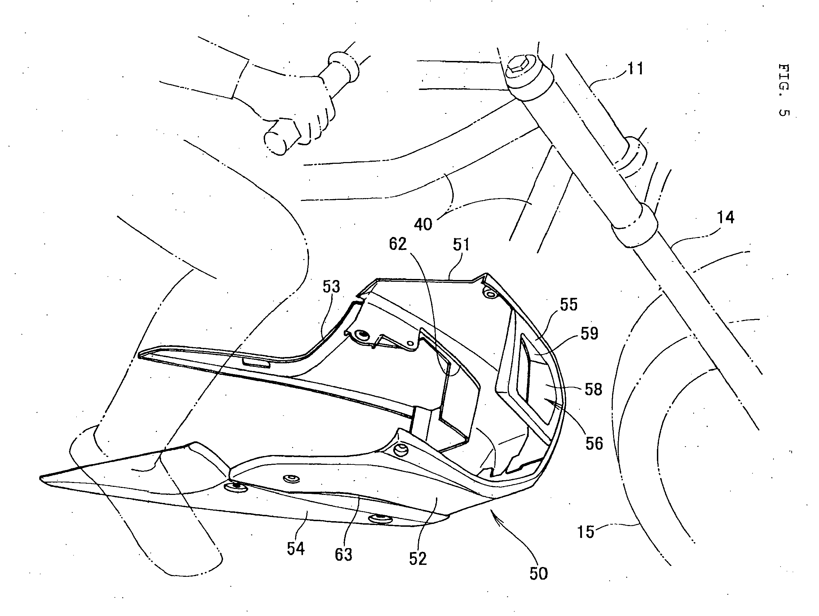

The internal combustion engine 30 having the arrangements as described above is supported on the vehicle body frame (reference numeral 40 in Fig. 5) as follows. Specifically, an engine support stay 36 extended from the vehicle body frame is connected to a front portion of the cylinder 32 using a bolt 37 and an engine support stay 38 is connected to a rear portion of the cylinder head 33 using a bolt 39.

The oil pan 35 is covered with the under cowl 50 shown by an imaginary line. In addition, a coolant return pipe 41 extends from a lower portion of the radiator 21 obliquely downwardly and then rearwardly along the vehicle before being connected to the internal combustion engine 30.

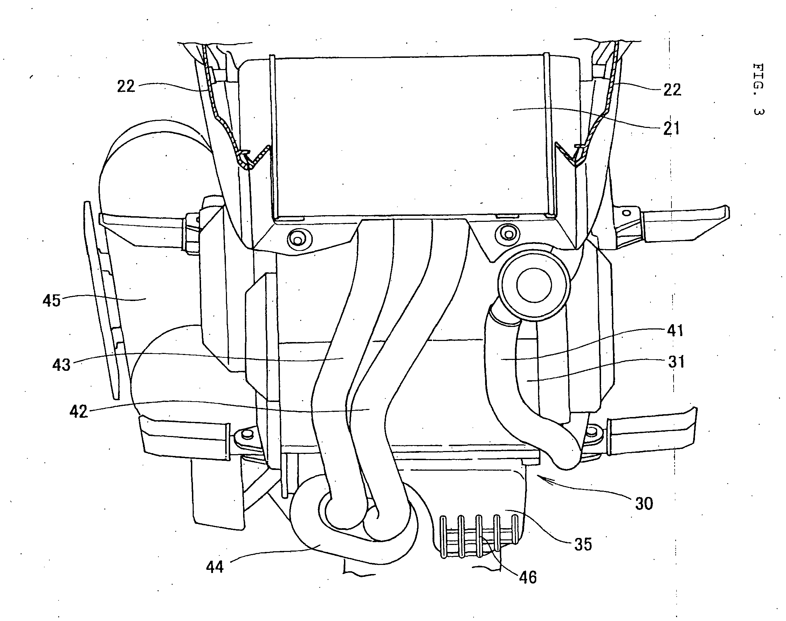

Referring to Fig. 3 that represents a view on arrow 3 of Fig. 2, the oil pan 35 is disposed, in a vehicle front view, on one side in the vehicle width direction (on the right-hand side in the vehicle width direction in the example), while exhaust pipes 42 and 43 extending from the internal combustion engine 30 are disposed on the other side in the vehicle width direction. A fin 46 is disposed in a grid pattern on part of the oil pan 35 from a front surface toward a bottom surface thereof. The fin 46 promotes cooling of the oil pan 35 and increases strength of the oil pan 35.

The exhaust pipes 42 and 43 are bent toward the other side in the vehicle width direction at a vehicle body center. A catalyzer 44 is connected to the exhaust pipes 42 and 43. Exhaust gas purified by the catalyzer 44 undergoes muffling by a muffler 45 disposed on the right of the vehicle body before being discharged.

Referring to Fig. 2, the catalyzer 44 is disposed so as to overlap the oil pan 35 in a vehicle side view.

Referring further to Fig. 3, the coolant return pipe 41 that extends from the radiator 21 is disposed on one side in the vehicle width direction.

Specifically, the exhaust pipes 42 and 43 and the oil pan 35 are juxtaposed in the vehicle width direction, so that the exhaust pipes 42 and 43 fit in place nicely. Additionally, the exhaust pipes 42 and 43 are bent to thereby extend their entire length. If the exhaust pipes 42 and 43 are disposed forwardly of the oil pan 35, the oil pan 35 is affected by heat. If the exhaust pipes 42 and 43 are bent to be spaced away from the oil pan 35 as in the present embodiment, however, cooling performance of the oil pan 35 can be maintained.

Additionally, the coolant return pipe 41 is disposed on one side in the vehicle width direction, while the exhaust pipes 42 and 43 or the catalyzer 44 is disposed on the other side in the vehicle width direction. The coolant return pipe 41 can be spaced away from the exhaust pipes 42 and 43 or the catalyzer 44 having high temperatures, so that a coolant temperature can be prevented from increasing.

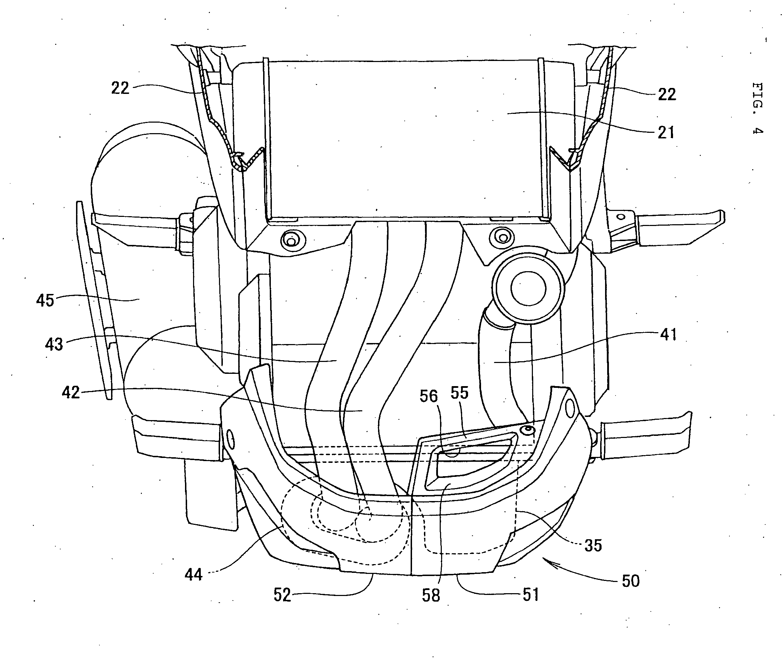

Fig. 4 shows what are shown in Fig. 3 to which the under cowl 50 is additionally drawn.

Referring to Fig. 4, the under cowl 50 covers the oil pan 35 and the catalyzer 44 from the forward direction. The under cowl 50 protects the catalyzer 44 as well as the oil pan 35. As a result, gravel or sand flying from a road surface is less likely to be hit against the oil pan 35 or the catalyzer 44.

Referring again to Fig. 2, an airflow introducing port 56 is disposed on the front side of the sheet in Fig. 2 with respect to the exhaust pipe 42 and the exhaust pipe 43 and the airflow introducing port 56 overlap each other in a vehicle side view. Specifically, referring to Fig. 4, the exhaust pipes 42 and 43 and the airflow introducing port 56 are separate in the vehicle width direction, so that the airflow is directed to the exhaust pipes 42 and 43 straightly, not via the airflow introducing port 56, while the airflow is directed to the oil pan 35 straightly via the airflow introducing port 56.

As a result, the exposed exhaust pipes 42 and 43 are favorably cooled, while the oil pan 35 is favorably protected by the under cowl 50, particularly a front surface cover 55.

Referring to Fig. 5, the under cowl 50 includes a cowl left half unit 51 and a cowl right half unit 52 which are formed of a resin and split into respective halves, a left extension 53 which is formed of a resin, connected to a rear portion of the cowl left half unit 51, and extends rearwardly therefrom along the vehicle, a right extension 54 which is formed of a metal, connected to a rear portion of the cowl right half unit 52, and extends rearwardly therefrom along the vehicle, and the front surface cover 55 which is integrated with, or removably mounted on, a front portion of the cowl left half unit 51. The front surface cover 55 has the airflow introducing port 56. The right extension 54 covers a side of the catalyzer (reference numeral 44 in Fig. 4) and is thus exposed to high temperatures. Nonetheless, the right extension 54 is formed of a metal and favorable in terms of heat resistance.

Preferably, a slit 62 as a long and thin opening is formed between a rear portion of the cowl left half unit 51 and a front portion of the left extension 53. A slit 63 is formed between a rear portion of the cowl right half unit 52 and a front portion of the right extension 54. The slits 62 and 63, being long and thin openings, allow the airflow with an increased flow velocity to flow into an inside of the under cowl 50. The airflow flowing in through the airflow introducing port 56 flows rearwardly along the vehicle, while being assisted by the fast airflow flowing through the slits 62 and 63. Specifically, the presence of the slits 62 and 63 allow an even greater volume of airflow to be introduced into the inside of the under cowl 50.

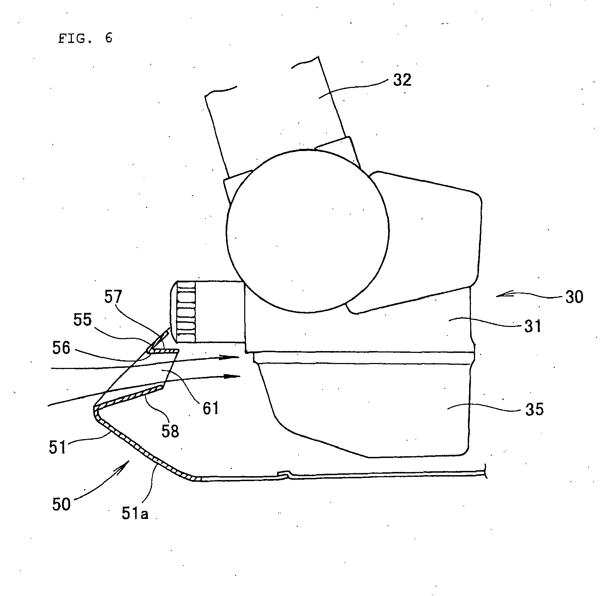

Preferably, the front surface cover 55 has an upper flange (reference numeral 57 in Fig. 6), a lower flange 58, a left flange 59, and a right flange (reference numeral 61 in Fig. 6) extended rearwardly along the vehicle from respective edges of the airflow introducing port 56. Having the flanges 58 and 59, for example, reinforces the airflow introducing port 56.

Referring to Fig. 6, the front surface cover 55 is inclined such that an upper end thereof is disposed rearwardly of a lower end thereof along the vehicle in a vehicle side view. The airflow introducing port 56 formed in such a front surface cover 55 opens obliquely upwardly so as to introduce the airflow to the oil pan 35 as shown by an arrow.

While the upper flange 57 and the right flange 61 extend rearwardly along the vehicle substantially in parallel with a vehicle longitudinal axis, the lower flange 58 is inclined such that a rear portion thereof is disposed upwardly of a front portion thereof.

As a result, the lower flange 58 is visible in a vehicle front view as shown in Fig. 4, thus narrowing a range over which the oil pan 35 is visible.

Referring also to Fig. 4, the airflow introducing port 56 in the under cowl 50 is disposed so as to overlap the oil pan 35 in a vehicle front view. This allows the airflow introduced through the airflow introducing port 56 to be directed straight to the oil pan 35, thus promoting cooling of the oil pan 35.

Referring to Fig. 6, the airflow introducing port 56 is open obliquely upwardly such that an upper end thereof is disposed rearwardly of a lower end thereof along the vehicle in a vehicle side view. Since the airflow introducing port 56 is open upwardly, flying gravel or sand from the road surface is less likely to enter the airflow introducing port 56, so that, for example, the flying gravel is less likely to hit against the oil pan 35.

Additionally, though the airflow introducing port 56 is open obliquely upwardly, the lower flange 58 is visible when the airflow introducing port 56 is viewed from above as shown in Fig. 5. Specifically, the oil pan 35 is not readily visible through the airflow introducing port 56 in a plan view, which enhances appearance.

Referring to Fig. 6, the cowl left half unit 51 is dogleg-shaped (a V-shape turned sideways to protrude forwardly) in a side view with the front surface cover 55 attached. An upper half portion of the dogleg shape is formed with the front surface cover 55 and a lower half portion of the dogleg shape is an inclined surface 51 a extending obliquely downwardly toward the rear (or obliquely upwardly toward the front).

The under cowl 50 is substantially shaped like a cone. This enhances windbreak performance and reduces running resistance. Additionally, a good part of gravel and other objects flying from the road surface hits against the inclined surface 51 a. Since the inclined surface 51 a is inclined, flying gravel and other objects are quickly returned back to the road surface. Thus, the oil pan 35 is favorably cooled by the airflow and protected from flying gravel and other objects.

The saddle riding type vehicle according to the present invention has been applied to a motorcycle in the embodiment. The saddle riding type vehicle according to the present invention may nonetheless be applied to saddle riding type three-wheeled or four-wheeled vehicles.

### Industrial Applicability

The present invention is suitable for saddle riding type vehicles comprising under cowls.

The present invention is directed to provide a saddle riding type vehicle comprising an under cowl structure that can enhance cooling performance of an oil pan, while retaining favorable appearance.

A front surface cover 55 is inclined such that an upper end thereof is disposed rearwardly of a lower end thereof along a vehicle in a vehicle side view. An airflow introducing port 56 formed in such a front surface cover 55 opens obliquely upwardly so as to introduce airflow to an oil pan 35 as shown by an arrow. While an upper flange 57 and a right flange 61 extend rearwardly along a vehicle substantially in parallel with a vehicle longitudinal axis, a lower flange 58 is inclined such that a rear portion thereof is disposed upwardly of a front portion thereof.

Airflow can be directed straight to the oil pan despite the presence of the under cowl. The inclined lower flange makes the oil pan less easily visible when viewed from above or front, thus achieving enhanced appearance.

## Claims

1. A saddle riding type vehicle comprising an internal combustion engine (30) which is supported on a vehicle body frame (40), an oil pan (35) which is provided at a lower portion of the internal combustion engine (30), and an under cowl (50) which covers an area forward of the oil pan (35), wherein
the under cowl (50) has an airflow introducing port (56) that opens at a position overlapping the oil pan (35) in a vehicle front view and opens obliquely upwardly such that an upper end of the airflow introducing port (56) is disposed rearwardly of a lower end thereof along the vehicle in a vehicle side view to thereby introduce airflow to the oil pan (35),
**characterized in that**
in the vehicle front view, the oil pan (35) is disposed on one lateral side in a vehicle width direction, and exhaust pipes (42, 43) extending from the internal combustion engine (30) are disposed on the other lateral side in the vehicle width direction, and
in the vehicle side view, the exhaust pipes (42, 43) overlap the airflow introducing port (56).

2. The saddle riding type vehicle according to claim 1, wherein upper and lower flanges (57, 58) and left and right flanges (59, 61) extend rearwardly along the vehiclefrom edges of the airflow introducing port (56).

3. The saddle riding type vehicle according to claim 2, wherein the lower flange (58) is inclined such that a rear portion thereof is disposed upwardly of a front portion thereof.

4. The saddle riding type vehicle according to claim 1, wherein
a catalyzer (44) for purifying exhaust gas is disposed on the exhaust pipes (42, 43), the catalyzer (44) being disposed at a position overlapping the oil pan (35) in the vehicle side view, and
the exhaust pipes (42, 43) from the internal combustion engine (30) to the catalyzer (44) are bent toward the other lateral side in the vehicle width direction from a vehicle body center in the vehicle front view.

5. The saddle riding type vehicle according to claim 1 or 4, wherein a coolant return pipe (41) extending from a radiator (21) is disposed on the one lateral side in the vehicle width direction in the vehicle front view.

## Patentansprüche

1. Fahrzeug vom Sattelfahrtyp, umfassend einen Verbrennungsmotor (30), welcher an einem Fahrzeugkörperrahmen (40) abgestützt ist, eine Ölwanne (35), welche an einem unteren Abschnitt von dem Verbrennungsmotor (30) vorgesehen ist, und eine untere Verkleidung (50), welche einen Bereich vorwärts von der Ölwanne (35) abdeckt, wobei
die untere Verkleidung (50) eine Luftströmungseinleitöffnung (56) hat, welche an einer Position öffnet, welche die Ölwanne (35) in einer Fahrzeug-Vorderansicht überlappt, und schräg aufwärts derart öffnet, dass ein oberes Ende von der Luftströmungseinleitöffnung (56) rückwärts von einem unteren Ende davon längs des Fahrzeugs in einer Fahrzeug-Seitenansicht angeordnet ist, um auf diese Weise eine Luftströmung zu der Ölwanne (35) einzuleiten,
**dadurch gekennzeichnet, dass**
die Ölwanne (35) in der Fahrzeug-Vorderansicht in einer Fahrzeug-Breitenrichtung auf einer lateralen Seite angeordnet ist, und Auslassrohre (42, 43), welche sich von dem Verbrennungsmotor (30) aus erstrecken, auf der in der Fahrzeug-Breitenrichtung anderen lateralen Seite angeordnet sind, und
die Auslassrohre (42, 43) in der Fahrzeug-Seitenansicht die Luftströmungseinleitöffnung (56) überlappen.

2. Fahrzeug vom Sattelfahrtyp nach Anspruch 1, wobei sich obere und untere Flansche (57, 58) und linke und rechte Flansche (59, 61) von Rändern von der Luftströmungseinleitöffnung (56) entlang des Fahrzeugs nach hinten erstrecken.

3. Fahrzeug vom Sattelfahrtyp nach Anspruch 2, wobei der untere Flansch (58) derart geneigt ist, dass ein hinterer Abschnitt davon aufwärts von einem vorderen Abschnitt davon angeordnet ist.

4. Fahrzeug vom Sattelfahrtyp nach Anspruch 1, wobei
ein Katalysator (44), um Abgas zu reinigen, an den Auslassrohren (42, 43) angeordnet ist, der Katalysator (44) an einer Position angeordnet ist, welche die Ölwanne (35) in der Fahrzeugseitenansicht überlappt, und die Auslassrohre (42, 43) von dem Verbrennungsmotor (30) zu dem Katalysator (44) in der Fahrzeug-Vorderansicht zu der anderen lateralen Seite hin in der Fahrzeug-Breitenrichtung von einer Fahrzeugkörpermittellinie gebogen sind.

5. Fahrzeug vom Sattelfahrtyp nach Anspruch 1 oder 4, wobei eine Kühlmittel-Rücklaufleitung (41), welche sich von einem Kühler (21) aus erstreckt, in der Fahrzeug-Vorderansicht auf der in der Fahrzeug-Breitenrichtung einen lateralen Seite angeordnet ist.

## Revendications

1. Véhicule de type à selle comprenant un moteur à combustion interne (30) qui est supporté sur une carrosserie de véhicule (40), un carter d'huile (35) qui est prévu à une partie inférieure du moteur à combustion interne (30) et une partie inférieure de capot (50) qui recouvre une zone située à l'avant du carter d'huile (35), dans lequel
la partie inférieure de capot (50) a un port d'introduction de flux d'air (56) qui s'ouvre à une position chevauchant le carter d'huile (35) dans une vue de face du véhicule et s'ouvre en oblique vers le haut de telle façon qu'une extrémité supérieure du port d'introduction de flux d'air (56) est disposée en arrière d'une extrémité inférieure de celui-ci le long du véhicule dans une vue latérale du véhicule afin d'introduire ce faisant le flux d'air dans le carter d'huile (35),
**caractérisé en ce que**
dans la vue de face du véhicule, le carter d'huile (35) est disposé d'un côté latéral dans le sens de la largeur du véhicule, et des tuyaux d'échappement (42, 43) s'étendant depuis le moteur à combustion interne (30) sont disposés de l'autre côté latéral dans le sens de la largeur du véhicule, et
dans la vue latérale du véhicule, les tuyaux d'échappement (42, 43) chevauchent le port d'introduction de flux d'air (56).

2. Véhicule de type à selle suivant la revendication 1, dans lequel des rebords supérieur et inférieur (57, 58) et des rebords gauche et droit (59, 61) s'étendent vers l'arrière le long du véhicule depuis les bords du port d'introduction de flux d'air (56).

3. Véhicule de type à selle suivant la revendication 2, dans lequel le rebord inférieur (58) est incliné de telle façon qu'une partie arrière de celui-ci est disposée plus haut qu'une partie avant de celui-ci.

4. Véhicule de type à enfourcher suivant la revendication 1, dans lequel
un catalyseur (44) pour purifier les gaz d'échappement est disposé sur les tuyaux d'échappement (42, 43), le catalyseur (44) étant disposé à une position chevauchant le carter d'huile (35) dans la vue latérale du véhicule, et
les tuyaux d'échappement (42, 43) du moteur à combustion interne (30) vers le catalyseur (44) sont coudés vers l'autre côté latéral dans le sens de la largeur du véhicule depuis un centre de la carrosserie du véhicule dans la vue de face du véhicule.

5. Véhicule de type à enfourcher suivant la revendication 1 ou 4, dans lequel une tuyauterie de retour de liquide de refroidissement (41) s'étendant depuis un radiateur (21) est disposée du côté latéral du véhicule dans le sens de la largeur du véhicule dans la vue de face du véhicule.
